# EUROPEAN PATENT APPLICATION

(11) **EP 4 353 550 A1**
(43) Date of publication of application: **17.04.2024**
(21) Application number: 23188143.4
(22) Date of filing: 27.07.2023
(51) Int. Cl.: B60T 7/22, B60T 13/74, B60W 30/095, B60W 50/08

(54) **VEHICLE CONTROL APPARATUS**

(30) Priority: 12.10.2022 JP 2022164231
(71) Applicant: Suzuki Motor Corporation, Hamamatsu-shi, Shizuoka 432-8611 (JP)
(72) Inventor: AIZU, Hiroshi, HAMAMATSU-SHI, 432-8611 (JP)
(74) Representative: Plasseraud IP

(57) **Abstract**

An obstacle detection unit detects presence of an obstacle in a traveling direction of a vehicle, an automatic braking control unit performs automatic braking control that retains braking force of the vehicle until a predetermined timing after automatically generating the braking force when there is a possibility of the collision (time t1), and an engine torque suppression unit suppresses increase in engine torque in response to accelerator operation by the driver when the obstacle continues to exist after generation of the braking force. The automatic braking control unit release retention of the braking force when there is an operation on the accelerator by the driver after generation of the braking force, and set a timing for releasing retention of the braking force to a later timing in a case of implementing torque suppression (time t7) than in a case of not implementing the torque suppression (time t4).

## Description

### BACKGROUND OF THE INVENTION

### Field of the Invention

The present invention relates to a vehicle control apparatus.

### Description of the Related Art

An autonomous emergency braking is known for the purpose of reducing damage at the time of collision of a vehicle.

Patent Document 1 discloses a technique for avoiding accidental start of the vehicle that is not based on intention of a driver after stopping the vehicle by emergency braking. Specifically, after the vehicle is stopped by the emergency brake, activation of the emergency brake is released when re-depression of the accelerator pedal is detected, i.e., when further depression of the accelerator pedal is detected through the fully closed state of the accelerator pedal. In other words, after stopping the vehicle by the emergency brake, re-depression of the accelerator pedal is detected for checking that the accelerator operation by the driver is based on the driver's own intention to start or accelerate the vehicle.

[Patent Document 1] JP 2018-065477 A

Here, it is required to control the vehicle behavior more safely and in line with the intention of the driver when the accelerator is operated by the driver after activation of the autonomous emergency braking.

According to the technique described in Patent Document 1, in terms of checking the intention of the driver and realizing the vehicle behavior that is in line with the intention of the driver, a certain effect can be expected by detecting re-depression of the accelerator pedal.

However, after an emergency stop in the case of presence of an obstacle such as a preceding vehicle near the front of the vehicle, if activation of the emergency brake is released in response to detection of re-depression of the accelerator pedal, it is conceivable that the driver erroneously depresses the accelerator pedal again by being panicked due to the sudden activation of the emergency brake. In such a case, regardless of the presence of the forward obstacle, the activation of the emergency brake is released and the vehicle is allowed to restart.

In order to suppress accidental start due to erroneous operation on the accelerator pedal by the driver when an obstacle is present in the traveling direction of the vehicle, there is also known a technique for suppressing increase in engine torque when the accelerator pedal is depressed to a large extent under the condition where an obstacle is present in the traveling direction of the vehicle.

When a vehicle is assumed to activate its emergency brake in the presence of a forward obstacle while traveling on an uphill road, increase in engine torque is suppressed by the presence of the forward obstacle at the time of restarting the vehicle after stopping. Thus, if the emergency brake is released in response to detection of re-depression of the accelerator pedal, there is a concern that the vehicle gravitationally slides downward and rearward due to insufficient engine torque.

### SUMMARY OF THE INVENTION

In view of the above-described circumstances, an object of the present invention is to provide a vehicle control apparatus that enables the vehicle to behave more safely and more in line with the intention of the driver when the accelerator is operated after braking by automatic braking control.

To resolve the above-mentioned problem, a vehicle control apparatus according to one aspect of the present invention includes: an obstacle detection unit configured to detect presence of an obstacle in a traveling direction of a vehicle; an automatic braking control unit configured to determine whether there is a possibility of collision with the obstacle or not and perform automatic braking control that retains braking force of the vehicle until a predetermined timing after automatically generating the braking force when there is a possibility of the collision; and an engine torque suppression unit configured to implement start torque-suppression control when the obstacle continues to exist after generation of the braking force, the start torque-suppression control being control that suppresses increase in engine torque in response to accelerator operation by the driver. The automatic braking control unit is further configured to: release retention of the braking force when there is an operation on the accelerator by the driver after generation of the braking force; and set a timing for releasing retention of the braking force after the generation of the braking force to a later timing in a case of implementing torque suppression in which the start torque-suppression control is performed than in a case of not implementing the torque suppression.

The vehicle control apparatus may further include an engine torque reduction unit configured to perform braking torque-reduction control in synchronization with implementation of the automatic braking control, the braking torque-reduction control being control that reduces engine torque to a predetermined braking limit torque regardless of an accelerator position.

The engine torque to be generated by the engine torque suppression unit in the start torque-suppression control may be larger than the braking limit torque.

The engine torque suppression unit may be configured to increase engine torque to a creep equivalent torque larger than the braking limit torque while retaining the braking force.

The vehicle control apparatus may further include an inclination angle detection unit configured to detect an inclination angle of a road surface. In such case, the engine torque suppression unit may be configured to set a target start torque based on the road-surface inclination angle detected by the inclination angle detection unit, the target start torque being an engine torque to be generated by the start torque-suppression control.

The target start torque may be larger than the braking limit torque, and when set based on the inclination angle of the road surface, the torque may be large enough to suppress sliding down of the vehicle.

The automatic braking control unit may be configured to release retention of the braking force after accelerator operation is performed by the driver and then an actual engine torque reaches the target start torque, in the case of implementing the torque suppression.

In some aspects where the vehicle control apparatus further includes an inclination angle detection unit that detects an inclination angle of a road surface, the engine torque suppression unit may be configured to set a target start torque that is an engine torque to be generated by the start torque-suppression control, based on the road-surface inclination angle detected by the inclination angle detection unit, and the automatic braking control unit may be configured to release retention of the braking force after accelerator operation is performed by the driver and then an actual engine torque reaches the target start torque, in the case of implementing the torque suppression.

The inclination angle detection unit may be configured to detect the road-surface inclination angle in response to elapse of a predetermined time after the accelerator operation by the driver.

The engine torque suppression unit may be configured to set the target start torque based on the road-surface inclination angle detected by the inclination angle detection unit after elapse of the predetermined time.

The predetermined time may be shorter as an absolute value of deceleration of the vehicle due to the braking force is smaller.

In some aspects where the inclination angle detection unit detects the road-surface inclination angle in response to elapse of a predetermined time after the accelerator operation by the driver, the engine torque suppression unit may be configured to set the target start torque based on the road-surface inclination angle detected by the inclination angle detection unit after elapse of the predetermined time, and also the predetermined time may be shorter as an absolute value of deceleration of the vehicle due to the braking force is smaller.

The automatic braking control unit may be configured to release retention of the braking force in conjunction with the accelerator operation by the driver and gradually reduce the braking force, in the case of not implementing the torque suppression.

The engine torque suppression unit may be configured to increase engine torque to a creep equivalent torque larger than the braking limit torque while retaining the braking force, and further the automatic braking control unit may be configured to release retention of the braking force in conjunction with the accelerator operation by the driver and gradually reduce the braking force, in the case of not implementing the torque suppression.

The vehicle control apparatus may further include: a wheel speed detection unit configured to detect wheel speed; and an acceleration detection unit configured to detect acceleration of the vehicle. In such case, the automatic braking control unit may be configured to increase a gradient in reducing the braking force, when change in acceleration obtained from the wheel speed detected by the wheel speed detection unit matches change in acceleration of the vehicle detected by the acceleration detection unit.

### EFFECT OF THE INVENTION

According to the present invention, the vehicle behavior can be made safer and in line with the intention of the driver when the accelerator is operated by the driver after braking by automatic braking control.

### BRIEF DESCRIPTION OF THE DRAWINGS

In the accompanying drawings:
Fig. 1 is a schematic diagram illustrating an overall configuration of a vehicle control apparatus according to one embodiment of the present invention;
Fig. 2 is a flowchart illustrating an overall flow of automatic braking control to be performed by the vehicle control apparatus according to the embodiment;
Fig. 3 is a flowchart illustrating contents of a braking-force-retention release processing to be performed by the vehicle control apparatus according to the embodiment;
Fig. 4 is a flowchart illustrating contents of collision possibility detection processing to be performed by the vehicle control apparatus according to the embodiment;
Fig. 5 is a flowchart illustrating contents of accidental start detection processing to be performed by the vehicle control apparatus according to the embodiment;
Fig. 6 is a graph illustrating relationship between an absolute value of deceleration (IDCLI) and time length required for operation of an inclination angle sensor to stabilize after stopping the vehicle by automatic braking control (i.e., sensor stabilization time ΔTstb); and
Fig. 7 is a timing chart illustrating the operation of the vehicle control apparatus according to one embodiment of the present invention.

### DETAILED DESCRIPTION

Hereinbelow, embodiments of the present invention will be described by referring to the accompanying drawings.

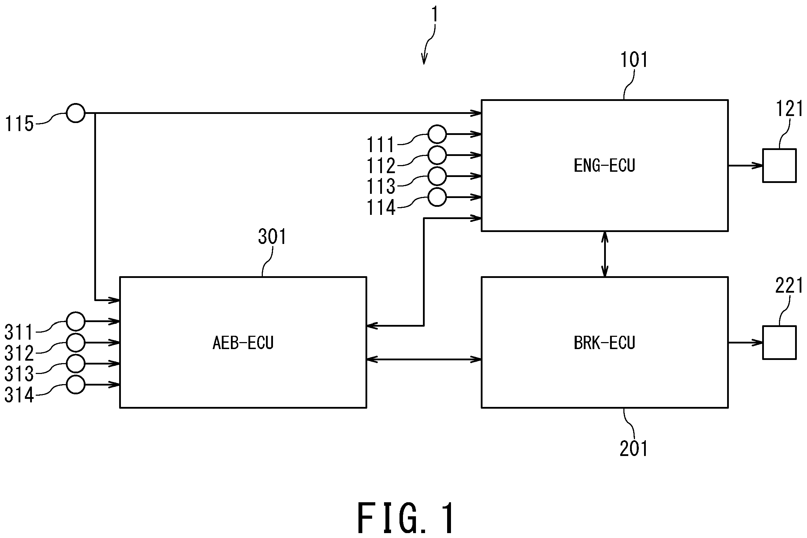

Fig. 1 is a schematic diagram illustrating an overall configuration of a vehicle control apparatus 1 according to one embodiment of the present invention.

The vehicle control apparatus 1 according to the present embodiment includes: an engine controller 101; a brake controller 201; and an autonomous emergency braking controller 301 (hereinafter referred to as the AEB controller 301). In the present embodiment, the vehicle uses an internal combustion engine (not shown, hereinafter simply referred to as "the engine") as a drive source for traveling. The vehicle is not limited to this aspect but may be an electric vehicle using an electric motor as a driving source or a hybrid vehicle using an engine and an electric motor as driving sources.

The engine controller 101 controls the operation of the engine. The control target of the engine controller 101 includes a fuel injector 121. The engine controller 101 reads in various sensor output information items indicating the operating state of the engine, and performs predetermined calculations on the basis of these information items. The engine controller 101 outputs the calculated actuator operation amount to a predetermined engine control device. For example, the engine controller 101 calculates fuel supply amount to be supplied to the engine, and outputs fuel-injector operation amount corresponding to the fuel supply amount to the fuel injector 121. The fuel injector 121 operates depending on the fuel-injector operation amount, and supplies the engine with the fuel, amount of which is dependent on the fuel supply amount.

The engine controller 101 receives sensor output information as a basis of calculation, which includes: operation amount on an accelerator pedal to be detected by an accelerator sensor 111 (hereinafter referred to as "the accelerator position APO"); depression amount of a brake pedal to be detected by a brake sensor 112 (hereinafter referred to as "the brake depression force BPF"); a shift position SFT of an automatic transmission to be detected by a shift position sensor 113; and wheel speed WSP to be detected by a wheel speed sensor 115. Further, the engine controller 101 receives output information from a first external sensor 114. In the present embodiment, the first external sensor 114 is an external sensor for rear monitoring, and can be achieved by, for example, a sonar sensor. The wheel speed WSP is rotational speed of the wheels (driven wheels in the present embodiment), and is a driving state parameter that correlates with the traveling speed of the vehicle, i.e., vehicle speed VSP.

The engine controller 101 constitutes an "engine torque suppression unit" and an "engine torque reduction unit" according to the present embodiment, and performs "engine torque suppression control at starting (hereinafter also referred to as the start torque-suppression control)" and "engine torque reduction control during braking (hereinafter also referred to as the braking torque-reduction control)" according to the present embodiment.

The brake controller 201 controls the operation of the braking device. A brake actuator 221 is included in the control target of the brake controller 201, and the brake controller 201 reads in automatic braking control information from the AEB controller 301 described below. The brake controller 201 performs a predetermined calculation on the basis of the information having been read in, and outputs the actuator operation amount, which is the result of the calculation, to the brake actuator 221. The brake actuator 221 operates depending on the actuator operation amount, and adjusts pressure of brake oil (hereinafter referred to as "brake fluid pressure"). The braking force acting on the vehicle increases as the brake fluid pressure increases, and decreases as the brake fluid pressure decreases. The brake fluid pressure is, for example, the pressure of the brake oil in a brake master cylinder.

The AEB controller 301 provides the automatic braking control information to the engine controller 101 and the brake controller 201. The information to be provided by the AEB controller 301 to the engine controller 101 and the brake controller 201 includes information indicating whether there is a possibility of collision with a forward obstacle or not. As to the control to be performed by both the engine controller 101 and the brake controller 201 on the basis of the automatic braking control information from the AEB controller 301, it will be described below in detail.

The AEB controller 301 receives: output information from external sensors 311 and 312; a road-surface inclination angle ANG to be detected by an inclination angle sensor 313; vehicle acceleration ACC to be detected by an acceleration sensor 314; and the wheel speed WSP to be detected by the wheel speed sensor 115. In the present embodiment, a plurality of external sensors, or the external sensors 311 and 312, are adopted for forward monitoring. For example, a camera can be used as the second external sensor 311 and a millimeter wave radar can be used as the third external sensor 312. The AEB controller 301 performs predetermined calculation on the basis of output information from the second and third external sensors 311 and 312, detects presence/absence of an obstacle near the front of the vehicle (hereinafter referred to as a "forward obstacle"), and determines its attribute. The attribute of an obstacle is, for example, whether it is a person or an object that includes other vehicles excluding the own vehicle, such as a preceding vehicle. When the AEB controller 301 detects presence of a forward obstacle and determines that there is a possibility of collision with the detected obstacle, the AEB controller 301 outputs the automatic braking control information indicating the possibility of collision with the forward obstacle to the engine controller 101 and the brake controller 201.

The AEB controller 301 constitutes "an automatic braking control unit" according to the present embodiment, and performs "the automatic braking control" according to the present embodiment. Furthermore, the AEB controller 301 cooperates with the second and third external sensors 311 and 312 so as to constitute "the obstacle detection unit" according to the present embodiment.

The wheel speed sensor 115 constitutes "a wheel speed detection unit" according to the present embodiment, the inclination angle sensor 313 constitutes "an inclination angle detection unit" according to the present embodiment, and the acceleration sensor 314 constitutes "an acceleration detection unit" according to the present embodiment.

The engine controller 101, the brake controller 201, and the AEB controller 301 are communicatively connected to each other. For example, various sensor output information items such as the road-surface inclination angle ANG to be inputted to the AEB controller 301 can be shared among the engine controller 101, the brake controller 201, and the AEB controller 301 via bus communication.

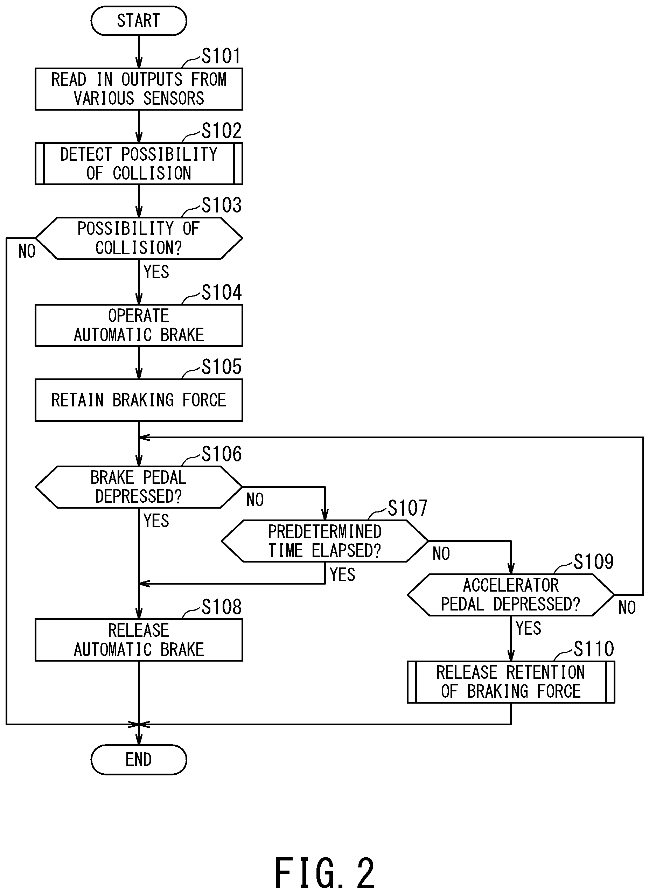

Fig. 2 is a flowchart illustrating the basic flow of the automatic braking control to be performed by the vehicle control apparatus 1 according to the present embodiment. In the present embodiment, the automatic braking control is performed by the AEB controller 301 at predetermined time intervals.

In the step S101, the AEB controller 301 reads in various sensor output information items related to the automatic braking control including: the output information from the second and third external sensors 311 and 312; the road-surface inclination angle ANG detected by the inclination angle sensor 313; and the vehicle acceleration ACC detected by the acceleration sensor 314.

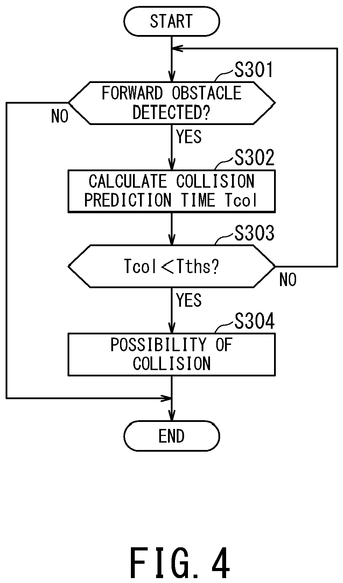

In the step S102, the AEB controller 301 detects whether there is a possibility of collision with a forward obstacle or not. In the present embodiment, the collision possibility detection processing is performed on the basis of the procedure shown in the flowchart of Fig. 4.

In the flowchart of Fig. 4, in the step S301, it is determined whether an obstacle near the front of the vehicle (i.e., presence of a forward obstacle) is detected or not. In the present embodiment, detection of the presence of the forward obstacle is based on the output information from the external sensors 311 and 312. If the presence of a forward obstacle is detected (i.e., if a forward obstacle is present), the processing proceeds to the step S302. If the presence of a forward obstacle is not detected, the collision possibility detection processing is completed without performing the processing from the step 302 to the step S304.

In the step S302, the AEB controller 301 calculates time to collision Tcol to the forward obstacle (hereinafter referred to as "the time to collision Tcol"). The calculation of the time to collision Tcol is based on, for example, the distance to the forward obstacle and the vehicle speed VSP. In the calculation of the time to collision Tcol, the vehicle acceleration ACC may be reflected.

In the step S303, it is determined whether the time to collision Tcol is shorter than a predetermined time Tths or not. If the time to collision Tcol is shorter than the predetermined time Tths, the processing proceeds to the step S304. Otherwise, the collision possibility detection processing is completed without performing the processing of the step 304.

In the step S304, the AEB controller 301 detects that there is a possibility of collision with the forward obstacle, and sets a flag indicating that there is a possibility of collision.

Returning to the flowchart of Fig. 2, in the step 103, it is determined whether the possibility of collision with the forward obstacle is detected by the collision possibility detection processing or not. If the possibility of collision with the forward obstacle is detected, the processing proceeds to the step S104. Otherwise, the automatic braking control by this routine is completed without performing the subsequent processing.

In the step S104, the automatic braking or the autonomous emergency braking is activated. Specifically, the AEB controller 301 instructs the brake controller 201 to operate the brake actuator 221 in order to increase the brake fluid pressure. As a result, the brake fluid pressure increases, the brake device operates regardless of the operation on the brake pedal by the driver, and the braking force BRK is automatically generated in the vehicle.

In the present embodiment, the engine torque reduction control during braking, or the braking torque-reduction control, is performed in conjunction with the activation of the automatic braking (i.e., generation of the braking force BRK by the automatic braking control), and the engine torque is reduced to a predetermined limit torque TRQ0 during braking (hereinafter, the limit torque TRQ0 during braking is referred to as the braking limit torque TRQ0). The braking torque-reduction control is performed by the engine controller 101 that has acquired the automatic braking control information from the AEB controller 301. The engine controller 101 increases the engine torque to a creep equivalent torque after the vehicle stops due to the generation of the braking force BRK. In other words, in the present embodiment, the braking limit torque TRQ0 is smaller than the creep equivalent torque. The creep equivalent torque is the torque to be outputted by the engine when the accelerator is fully closed.

In the step S105, the braking force BRK generated by the processing of the step S104 is retained even after braking the vehicle. For example, even after stop of the vehicle due to the generation of the braking force BRK, the brake fluid pressure is retained and its braking force BRK is retained.

In the step S106, it is determined whether the driver has depressed the brake pedal while the braking force BRK is being retained. If the brake pedal has been depressed, the processing proceeds to the step 108. If the brake pedal has not been depressed, the processing proceeds to the step S107. In other words, if the brake pedal has been depressed by the driver while the braking force BRK is being retained, the processing proceeds to the step S108 in order to shift to normal brake control in accordance with the operation on the brake pedal.

In the step S107, it is determined whether a predetermined time has elapsed after shifting to retention of the braking force BRK. As a simplified manner, the elapsed time after stopping the vehicle by generating the braking force BRK is measured, and it is determined whether this measured time has reached a predetermined time or not. If the predetermined time has elapsed, the processing proceeds to the step S108. If the predetermined time has not elapsed, the processing proceeds to the step S109. In other words, if the braking force BRK is retained for a predetermined time without any accelerator operation or brake operation after stopping the vehicle, the processing proceeds to the step S108 in order to shift to a state in which the vehicle is allowed to re-start.

In the step S108, the automatic braking is released. Specifically, the AEB controller 301 instructs the brake controller 201 to operate the brake actuator 221 in order to quickly reduce the brake fluid pressure.

In the step S109, it is determined whether the accelerator pedal is depressed by the driver while the braking force BRK is being retained. If the accelerator pedal is depressed, the processing proceeds to the step S110. If the accelerator pedal is not depressed, the processing from the step S106 to the step 109 is repeatedly performed.

In the step S110, braking-force-retention release processing is performed. In other words, if the accelerator pedal is depressed by the driver while the braking force BRK is being retained, retention of the braking force BRK is released by the braking-force-retention release processing, and the vehicle is allowed to restart in accordance with the driver's intention to start or accelerate the vehicle.

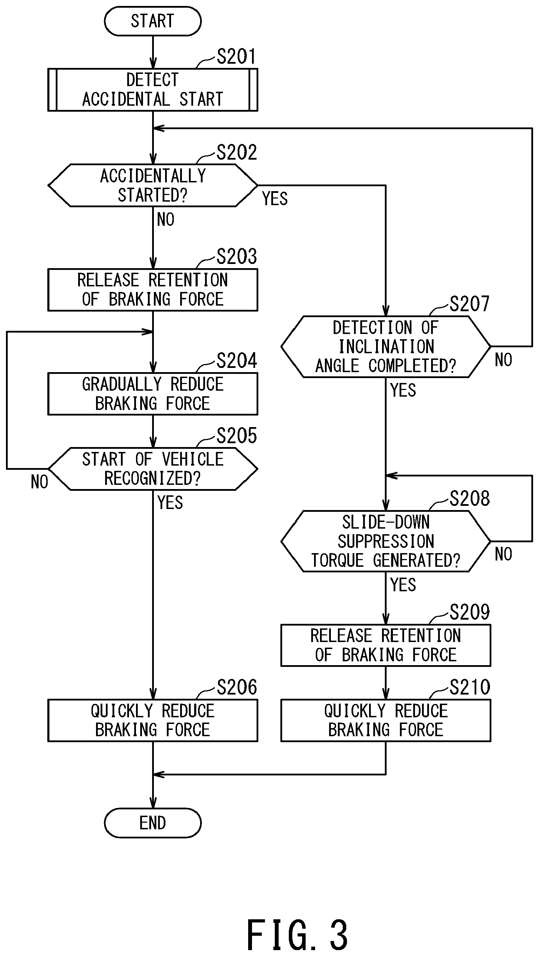

Fig. 3 is a flowchart illustrating the braking-force-retention release processing according to the present embodiment.

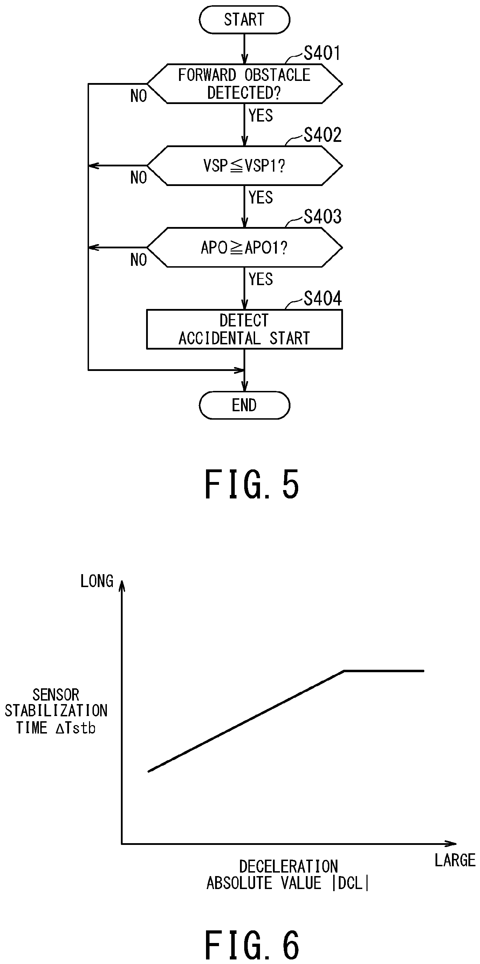

In the step S201, the AEB controller 301 detects that depression of the accelerator pedal by the driver (step S109 in Fig. 2) is not based on the driver's own intention but an erroneous operation. In the present embodiment, accidental start detection processing is performed on the basis of the procedure shown in the flowchart of Fig. 5.

In the step S401, it is determined whether the presence of the forward obstacle is detected or not. If the presence of the forward obstacle is detected, the processing proceeds to the step S402. If the presence of the forward obstacle is not detected, the accidental start detection processing is completed without performing the processing from the step S402 to the step S404.

In the step S402, it is determined whether the vehicle speed is a predetermined vehicle speed VSP1 or slower. If the vehicle speed is equal to or slower than the predetermined vehicle speed VSP1, the processing proceeds to the step S403. If the vehicle speed is faster than the predetermined vehicle speed VSP1, the accidental start detection processing is completed without performing the processing of the steps S403 and S404. The predetermined vehicle speed VSP1 is, for example, 10 km/h, and it is determined in the step S402 whether the vehicle is traveling at a slow speed or stopped.

In the step S403, it is determined whether the accelerator position APO is a predetermined accelerator position APO1 or more. If the accelerator position APO is equal to or more than predetermined accelerator position APO1, the processing proceeds to the step S404. If the accelerator position APO is less than the predetermined accelerator position APO1, the accidental start detection processing is completed without performing the processing of the step S404. The predetermined accelerator position APO1 is a position by which depression of the accelerator pedal by the driver can be determined as an erroneous operation, such as the case where the driver hastily depressed the accelerator pedal to a large extent.

In the step S404, the AEB controller 301 determines that depression of the accelerator pedal by the driver (step S109 in Fig. 2) is an erroneous operation, detects accidental start of the vehicle, and sets a flag indicating that accidental start is detected, for example.

Returning to the flowchart of Fig. 3, in the step S202, it is determined whether accidental start of the vehicle is detected by the accidental start detection processing or not. If the accidental start of the vehicle is detected, the processing proceeds to the step S207. If the accidental start of the vehicle is not detected, the processing proceeds to the step S203.

In the present embodiment, when the accidental start of the vehicle is detected after stopping the vehicle by generating the braking force BRK, engine torque suppression control at starting, or the start torque-suppression control, is performed to suppress increase in engine torque in response to the accelerator operation. The start torque-suppression control is performed by the engine controller 101 in conjunction with the automatic braking control by the AEB controller 301. In the case of implementing torque suppression in which the start torque-suppression control is performed (hereinafter sometimes referred to as "torque-down implementation" or "the case of implementing torque-down control"), the engine controller 101 controls the engine torque to a target torque at starting over a period during which the start torque-suppression control is continued. After completing the start torque-suppression control, the engine controller 101 gradually increases the engine torque from the target torque at starting toward the target torque in accordance with the accelerator position APO. In the following, "the target torque at starting" is referred to as "the target start torque".

In the step S203, retention of the braking force BRK is released. In other words, if the presence of the forward obstacle disappears while the braking force BRK is retained, or even in the case where the forward obstacle continues to exist, if the depression of the accelerator pedal by the driver is not the driver's erroneous operation but based on the driver's intention, the processing proceeds to the step S203 in order to allow the vehicle to start at a relatively early time. If the accidental start is not detected, i.e., if torque suppression is not performed (hereinafter sometimes referred to as "non-implementation of torque-down control" or "the case of not implementing torque-down control"), engine torque in accordance with the accelerator position APO is outputted without performing the start torque-suppression control.

In the step S204, the braking force BRK is gently reduced. Specifically, the brake controller 201 is instructed to gradually lower the brake fluid pressure by operating the brake actuator 221.

In the step S205, it is determined whether the start of the vehicle in the traveling direction is recognized or not. If the start of the vehicle in the traveling direction is recognized, the processing proceeds to the step S206. Otherwise, the processing of the steps S204 and S205 is repeatedly executed. In the present embodiment, recognition of the start of the vehicle in the traveling direction is achieved by detecting that change in acceleration obtained on the basis of the wheel speed WSP to be detected by the wheel speed sensor 115 matches change in acceleration ACC to be detected by the acceleration sensor 314.

In the step S206, the braking force BRK is quickly reduced. Specifically, the brake controller 201 is instructed to quickly reduce the brake fluid pressure by operating the brake actuator 221 (i.e., is instructed to increase the gradient at the time of reducing the braking force BRK more than the gradient at the time of reducing it by the processing of the above-described step S204).

In the step S207, it is determined whether the operation of the inclination angle sensor 313 has stabilized and the detection of the road-surface inclination angle ANG by the inclination angle sensor 313 is completed or not, after the stop of the vehicle by the generation of the braking force BRK. If the detection of the road-surface inclination angle ANG is completed, the processing proceeds to the step S208. Otherwise, the processing of the steps S202 and S207 is repeatedly executed.

The determination as to whether detection of the road-surface inclination angle ANG has been completed is achieved by comparing a predetermined sensor stabilization time ΔTstb with the elapsed time ΔT after the stop of the vehicle by the generation of the braking force BRK. The sensor stabilization time ΔTstb is the time length required for the operation of the inclination angle sensor 313 to stabilize after the stop of the vehicle, and changes depending on the deceleration DCL of the vehicle during braking.

Fig. 6 is a graph illustrating relationship between the sensor stabilization time ΔTstb and deceleration DCL (specifically, its absolute value IDCLI). In the present embodiment, the sensor stabilization time ΔTstb is set shorter as the absolute value |DCL| of the deceleration is smaller.

In the step S208, it is determined whether the actual engine torque has reached a slide-down suppression torque or not. If the actual engine torque has reached the slide-down suppression torque, the processing proceeds to the step S209. Otherwise, the processing of the step S209 is repeatedly executed until it reaches the slide-down suppression torque.

On the basis of the road-surface inclination angle ANG detected by the inclination angle sensor 313 after elapse of the sensor stabilization time ΔTstb, the engine controller 101 sets an engine torque (hereinafter referred to as "the slide-down suppression torque") by which gravitational sliding in the direction opposite to the traveling direction of the vehicle can be suppressed regardless of the braking force to be generated by the foot brake. For example, the slide-down suppression torque at the time of moving forward at an uphill road is an engine torque by which the vehicle can be suppressed from sliding backward. The engine controller 101 controls the engine torque such that the engine torque matches the slide-down suppression torque. The slide-down suppression torque corresponds to "the target start torque" according to the present embodiment.

In the step S209, retention of the braking force BRK is released.

In the case of implementing torque-down control in which the start torque-suppression control is performed for re-starting the vehicle, increase in engine torque with respect to accelerator operation is suppressed. Here, under the condition where the engine torque has reached the slide-down suppression torque equivalent to the target start torque, even if retention of the braking force BRK by the automatic braking control is released and the braking force BRK is reduced, the engine torque can be made large enough to prevent the vehicle from gravitationally sliding downward and rearwards.

By the time the start torque-suppression control is completed and the engine torque is gradually increased, the braking force BRK is in the state of having already been reduced by the processing in the step S210 described below, and thus, the vehicle can be started smoothly.

In the step S210, the braking force BRK is quickly reduced. Specifically, the brake controller 201 is instructed to quickly reduce the brake fluid pressure by operating the brake actuator 221. In the present embodiment, the gradient at the time of reducing the braking force BRK by the processing of the step S210 is larger than the gradient at the time of reducing it by the processing of the step S204, and is almost the same as the gradient at the time of reducing it by the processing of the step S206 after recognition of the start of the vehicle in the traveling direction.

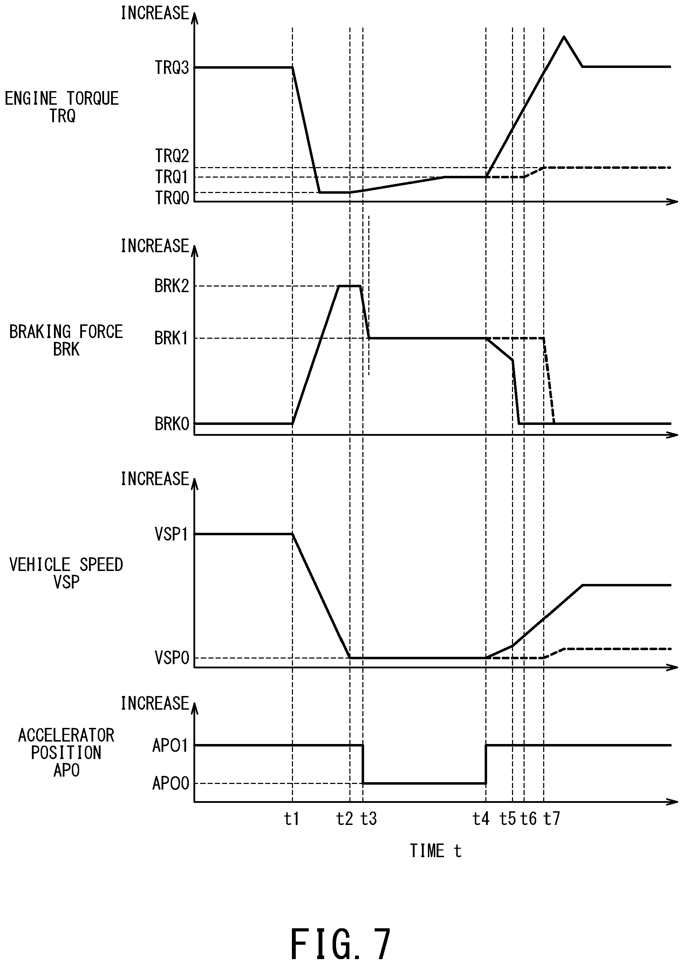

Fig. 7 is a timing chart illustrating the operation of the vehicle control apparatus 1 according to the present embodiment.

Assume a situation where a preceding vehicle appears as the forward obstacle in front of the own vehicle that outputs the engine torque TRQ3 and is traveling on an uphill road at the vehicle speed VSP1. When the vehicle continues to travel at the vehicle speed VSP1 after detection of the presence of the preceding vehicle and the AEB controller 301 determines at a time t1 that the time to collision Tcol with the preceding vehicle has become shorter than the predetermined time Tths, the AEB controller 301 detects the possibility of collision with the preceding vehicle and performs the automatic braking control. The implementation of the automatic braking control increases the brake fluid pressure to the peak fluid pressure, and then the engine fluid pressure is retained at the maximum retention fluid pressure. Due to this change in brake fluid pressure, the braking device generates a braking force BRK2 corresponding to the peak fluid pressure, and then retains the braking force BRK1 corresponding to the maximum retention fluid pressure. Along with the generation of the braking force BRK, the engine controller 101 performs the braking torque-reduction control so as to reduce the engine torque to the braking limit torque TRQ0. Due to the generation of the braking force BKR and the reduction of the engine torque TRQ, the vehicle decelerates and stops at a time t2.

After the stop of the vehicle, the engine controller 101 increases the engine torque from the braking limit torque TRQ0 to the creep equivalent torque TRQ1, and then retains the creep equivalent torque TRQ1 while retaining the braking force BRK.

Here, at a time t3 after the stop of the vehicle, it is assumed that the driver takes the foot off the accelerator pedal and the accelerator pedal is returned to the fully closed position.

When the driver depresses the accelerator pedal at a time t4, the engine torque TRQ is increased and retention of the braking force BRK is released. The control after the accelerator operation differs between: the case where the preceding vehicle continues to exist near the front; and the case where the preceding vehicle moves ahead and out of the range to be recognized as the forward obstacle.

If the preceding vehicle continues to exist near the front, under the condition where the accelerator operation by the driver may deviate from the normal operation range, the start torque-suppression control is performed (i.e., torque-down implementation) to suppress increase in engine torque for the accelerator operation. Conversely, if the preceding vehicle is out of the range to be recognized as the forward obstacle, the engine torque in accordance with the accelerator position APO is outputted without performing the start torque-suppression control (i.e., non-implementation of torque-down control).

Fig. 7 illustrates the engine torque TRQ, the braking force BRK, and the vehicle speed after the accelerator operation by dotted lines for the torque-down implementation and by solid lines for the non-implementation of torque-down control.

In the case of implementing torque-down control, also after the accelerator operation, the engine torque TRQ (creep equivalent torque TRQ1) is retained and the braking force BRK1 equivalent to the maximum fluid pressure is retained. When it is determined at a time t6 that the sensor stabilization time ΔTstb has elapsed, the inclination angle sensor 313 detects the road-surface inclination angle ANG, the target start torque TRQ2 (i.e., the slide-down suppression torque in the present embodiment) in accordance with the road-surface inclination angle ANG is calculated, and the engine torque TRQ is controlled so as to match the target start torque TRQ2. When the engine torque TRQ reaches the target start torque TRQ2 (at a time t7), the AEB controller 301 releases retention of the braking force BRK and quickly reduces the braking force BRK.

In the case of not implementing torque-down control, the engine torque TRQ is controlled to the target torque in accordance with the accelerator position APO, retention of the braking force BRK is released, and the braking force BRK is gradually reduced. When the AEB controller 301 recognizes start of the vehicle in the traveling direction at a time t5 by increase in the engine torque TRQ and decrease in the braking force BRK, the AEB controller 301 quickly decreases the braking force BRK with a larger gradient.

The vehicle control apparatus according to the present embodiment has the above-described configuration. The effects to be obtained by the present embodiment are described below.

Firstly, when presence of an obstacle (forward obstacle) in the traveling direction of the vehicle is detected and there is a possibility of collision with the detected obstacle, the braking force BRK of the vehicle is generated by the automatic braking control, and the braking force BRK is retained for a predetermined period after generation. As a result, the possibility of collision with the obstacle can be reduced, and the damage to be caused by the collision can be reduced even in the event of the collision.

After generation of the braking force BRK by the automatic braking control, though retention of the braking force BRK is released to allow the vehicle to restart or reaccelerate in response to the driver's accelerator operation, the timing to release retention of the braking force BRK is differentiated between: the case of implementing torque-down control (or torque suppression) in which the start torque-suppression control is performed; and the case of not implementing torque-down control (i.e., the case where torque suppression is not implemented).

Specifically, in the case of implementing torque-down control, the timing of releasing retention of the braking force BRK is delayed as compared with the case of not implementing torque-down control. In other words, in the case of implementing torque-down control, the period from the accelerator operation (at the time t4 shown in Fig. 7) to the release of retention of the braking force BRK is set to be longer than in the case of not implementing torque-down control. In the present embodiment, the accelerator operation and the release of retention of the braking force BRK are synchronized in the case of implementing torque-down control. In the case of not implementing torque-down control, after the accelerator operation, retention of the braking force BRK is released after waiting for the engine torque to reach the target start torque (slide-down suppression torque) TRQ2.

As a result, in the case of not implementing torque-down control, retention of the braking force BRK can be released at a relatively early time (at the time t4), which allows the vehicle to restart or accelerate again quickly.

In the case of implementing torque-down control, adverse effects associated with implementation of the start torque-suppression control can be reduced by: delaying the timing to release retention of the braking force BRK; continuing to retain the braking force BRK even after the accelerator operation; and releasing it after generation of the slide-down suppression torque TRQ2 (at the time t7).

For example, when the vehicle detects presence of a forward obstacle while traveling forward on an uphill road and then stops by the automatic braking control, a situation can be avoided, in which increase in engine torque TRQ is suppressed by the start torque-suppression control with respect to sudden depression of the accelerator pedal after the stop of the vehicle, retention of the braking force BRK is released before generation of sufficient engine torque TRQ and then the vehicle gravitationally slides downward and rearward.

In this manner, according to the present embodiment, the vehicle behavior can be made safer and in line with the intention of the driver when the accelerator is operated after braking by the automatic braking control.

Secondly, the braking torque-reduction control is performed in synchronization with the implementation of the automatic braking control so as to reduce the engine torque TRQ to the predetermined braking limit torque TRQ0, which enables the braking by the automatic braking control to work more effectively.

Thirdly, the slide-down suppression torque TRQ2 (i.e., the engine torque to be generated by the start torque-suppression control) is set as a larger torque than the braking limit torque TRQ0. Hence, in the case of stopping the vehicle on an uphill road, engine torque sufficient for preventing the vehicle from gravitationally sliding downward and rearward can be generated, which realizes safer vehicle behavior.

The above-described third effect can be obtained not only in the case of stopping the vehicle on an uphill road but also in the case of stopping the vehicle on a downhill road. For example, the slide-down suppression torque TRQ2 is set as an engine torque that is sufficiently large to prevent the vehicle from gravitationally sliding downward and forward at the time of stopping on a downhill road. Whether the road on which the vehicle is traveling is an uphill road or a downhill road can be determined on the basis of the road-surface inclination angle ANG. Whether the direction of sliding down is forward or rearward can be determined on the basis of the shift position SFT.

Fourthly, when the vehicle is on a sloping road, setting the slide-down suppression torque TRQ2 on the basis of the road-surface inclination angle ANG enables the vehicle to be suppressed from gravitationally sliding downward without depending on the braking force despite the sloping road.

In the case of implementing torque-down control, after the driver operates the accelerator, the braking force BRK is retained until the engine torque TRQ reaches the slide-down suppression torque TRQ2, which allows the vehicle to avoid a situation where the vehicle gravitationally slides downward due to insufficient engine torque TRQ after releasing retention of the braking force BRK.

The inclination angle sensor 313 to be used for detecting the road-surface inclination angle ANG is affected by the deceleration of the vehicle during braking, so it is difficult to accurately detect the road-surface inclination angle ANG until the operation of the inclination angle sensor 313 stabilizes.

For this reason, fifthly, the road-surface inclination angle ANG is detected at an earlier time after the accelerator operation as the absolute value of the deceleration DCL is smaller, and the slide-down suppression torque TRQ2 is set. Consequently, when the absolute value of the deceleration DCL is large, detection of the road-surface inclination angle ANG and setting of the slide-down suppression torque TRQ2 are prevented from being excessively affected by deceleration during braking, and thus, the slide-down suppression torque TRQ2 can be appropriately set on the basis of an accurately detected road-surface inclination angle ANG.

Conversely, when the absolute value of the deceleration DCL is small, retention of the braking force BRK can be released at a relatively early time after the accelerator operation. As a result, after the start torque-suppression control is completed, the vehicle can avoid a situation where restoration of the engine torque TRQ and reduction of the braking force BRK interfere with each other and thereby satisfactory startability of the vehicle is impaired.

Sixthly, in the case of not implementing torque-down control, retention of the braking force BRK is released in conjunction with the driver's accelerator operation and the braking force BRK is gradually reduced, which prevents the vehicle from sharply starting or sharply accelerating due to excessive depression of the accelerator pedal and realizes safer vehicle behavior.

Since the engine torque TRQ is increased from the braking limit torque TRQ0 to the creep equivalent torque TRQ1 while the braking force BRK is being retained, the vehicle can be started quickly after releasing retention of the braking force BRK, which allows the vehicle to behave more in line with the intention of the driver.

Seventhly, checking and recognizing that the vehicle is starting in the traveling direction allows the vehicle control apparatus to make sure that the driver has the intention to start or accelerate the vehicle and the vehicle is not in a situation of being gravitationally sliding downward on a sloping road contrary to the intention of the driver. In such a case, more appropriate vehicle behavior reflecting the intention of the driver can be achieved by: increasing the gradient at the time of reducing the braking force BRK; and quickly reducing the braking force BRK.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1: vehicle control apparatus
- 101: engine controller
- 201: brake controller
- 301: AEB (Autonomous Emergency Braking) controller
- 111: accelerator sensor
- 112: brake sensor
- 113: shift position sensor
- 114: first external sensor (sonar sensor)
- 115: wheel speed sensor
- 311: camera
- 312: millimeter wave radar
- 313: inclination angle sensor
- 314: acceleration sensor
- 121: fuel injector
- 221: brake actuator

## Claims

1. A vehicle control apparatus comprising:
an obstacle detection unit configured to detect presence of an obstacle in a traveling direction of a vehicle;
an automatic braking control unit configured to
determine whether there is a possibility of collision with the obstacle or not and
perform automatic braking control for retaining braking force of the vehicle until a predetermined timing after automatically generating the braking force when there is a possibility of the collision; and
an engine torque suppression unit configured to implement start torque-suppression control when the obstacle continues to exist after generation of the braking force, the start torque-suppression control being control that suppresses increase in engine torque in response to accelerator operation by the driver,
wherein the automatic braking control unit is further configured to:
release retention of the braking force when there is an operation on the accelerator by the driver after generation of the braking force; and
set a timing for releasing retention of the braking force to a later timing in a case of implementing torque suppression in which the start torque-suppression control is performed than in a case of not implementing the torque suppression.

2. The vehicle control apparatus according to claim 1, further comprising an engine torque reduction unit configured to perform braking torque-reduction control in synchronization with implementation of the automatic braking control, the braking torque-reduction control being control that reduces engine torque to a predetermined braking limit torque regardless of an accelerator position.

3. The vehicle control apparatus according to claim 2, wherein the engine torque to be generated by the engine torque suppression unit in the start torque-suppression control is larger than the braking limit torque.

4. The vehicle control apparatus according to claim 2 or claim 3, wherein the engine torque suppression unit is configured to increase engine torque to a creep equivalent torque larger than the braking limit torque while retaining the braking force.

5. The vehicle control apparatus according to any one of claim 1 to claim 4, further comprising an inclination angle detection unit configured to detect an inclination angle of a road surface,
wherein the engine torque suppression unit is configured to set a target start torque based on the road-surface inclination angle detected by the inclination angle detection unit, the target start torque being an engine torque to be generated by the start torque-suppression control.

6. The vehicle control apparatus according to claim 5, wherein the automatic braking control unit is configured to release retention of the braking force after accelerator operation is performed by the driver and then an actual engine torque reaches the target start torque, in the case of implementing the torque suppression.

7. The vehicle control apparatus according to claim 5 or 6, wherein the inclination angle detection unit is configured to detect the road-surface inclination angle in response to elapse of a predetermined time after the accelerator operation by the driver.

8. The vehicle control apparatus according to claim 7, wherein the engine torque suppression unit is configured to set the target start torque based on the road-surface inclination angle detected by the inclination angle detection unit after elapse of the predetermined time.

9. The vehicle control apparatus according to claim 7 or claim 8, wherein the predetermined time is shorter as an absolute value of deceleration of the vehicle due to the braking force is smaller.

10. The vehicle control apparatus according to any one of claim 1 to claim 9, wherein the automatic braking control unit is configured to release retention of the braking force in conjunction with the accelerator operation by the driver and gradually reduce the braking force, in the case of not implementing the torque suppression.

11. The vehicle control apparatus according to claim 10, further comprising:
a wheel speed detection unit configured to detect wheel speed; and
an acceleration detection unit configured to detect acceleration of the vehicle,
wherein the automatic braking control unit is configured to increase a gradient in reducing the braking force, when change in acceleration obtained from the wheel speed detected by the wheel speed detection unit matches change in acceleration of the vehicle detected by the acceleration detection unit.
